(19) Europäisches Patentamt
European Patent Office
Office européen des brevets

(11) Veröffentlichungsnummer: **0 283 643 B1**

(12) # EUROPÄISCHE PATENTSCHRIFT

(45) Veröffentlichungstag der Patentschrift: **08.07.92**

(51) Int. Cl.$^5$: **B27K 3/50**

(21) Anmeldenummer: **88100507.8**

(22) Anmeldetag: **15.01.88**

(54) **Mittel oder Konzentrat zum Konservieren von Holz und Holzwerkstoffen.**

(30) Priorität: **19.03.87 DE 3708893**

(43) Veröffentlichungstag der Anmeldung:
**28.09.88 Patentblatt 88/39**

(45) Bekanntmachung des Hinweises auf die Patenterteilung:
**08.07.92 Patentblatt 92/28**

(84) Benannte Vertragsstaaten:
**AT BE CH DE ES FR GB GR IT LI LU NL SE**

(56) Entgegenhaltungen:
**EP-A- 0 043 035**
**EP-A- 0 148 526**
**EP-A- 0 180 313**
**EP-A- 0 198 165**
**DE-A- 2 711 639**
**DE-A- 3 414 244**
**DE-A- 3 531 257**
**DE-B- 2 644 077**

(73) Patentinhaber: **DESOWAG Materialschutz GmbH**
**Rossstrasse 76 Postfach 32 02 20**
**W-4000 Düsseldorf 30(DE)**

(72) Erfinder: **Metzner, Wolfgang, Dr.**
**Buschstrasse 151**
**W-4150 Krefeld(DE)**
Erfinder: **Grüning, Rainer, Dr.**
**Franz-Hitze-Strasse 14**
**W-4150 Krefeld(DE)**

(74) Vertreter: **Seiler, Siegfried**
**Langhansstrasse 6**
**W-5650 Solingen 11(DE)**

**EP 0 283 643 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Mittel zum Konservieren von Holz und Holzwerkstoffen auf der Bais von oder unter Mitverwendung von 1-[[2-(2,4-dichlorphenyl)-1,3-dioxolan-2-yl]methyl]-1H-1,2,4-triazol, mindestens eines Verdünnungsmittels in einer bestimmten Wirkstoffkombination sowie ggf. eines Verarbeitungshilfs- und/oder Zusatzmittels, eines organisch-chemischen Bindemittels und/oder Fixierungsmittels, Farbstoffes, Pigmentes, Farbstoff- oder Pigmentgemisches.

Die chemische Verbindung 1-[[2-(2,4-dichlorphenyl)-1,3-dioxolan-2-yl]methyl]-1H-1,2,4-triazol, (Azaconazol) mit der Strukturformel

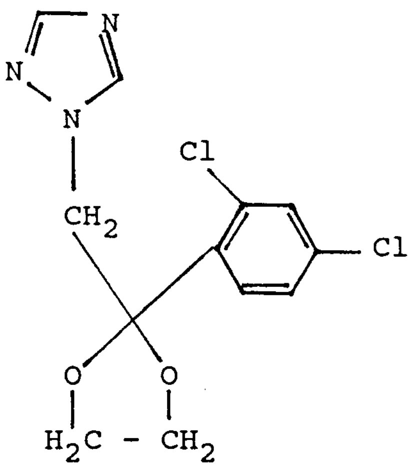

ist bereits aus der DE-PS 25 51 560 als fungizides und pflanzenwuchsregulierendes Mittel in der Landwirtschaft bekannt.

Ziel und Aufgabe der vorliegenden Erfindung war es, ein wasserfreies Holzkonservierungsmittel zu finden, das gegenüber holzverfärbenden und holzzerstörenden Pilzen sowie gegenüber holzschädigenden Insekten, wie Termiten hochwirksam ist und eine gute Langzeitwirkung aufweist, wobei die Wirksamkeit des Fungizides durch das Insektizid nicht beeinträchtigt wird bzw. umgekehrt. Darüber hinaus sollte das Holzkonservierungsmittel ein gutes Eindringvermögen im Holz und in den Holzwerkstoffen aufweisen und lagerbeständig sein.

Erfindungsgemäß wurde festgestellt, daß ein Mittel oder Konzentrat zum Konservieren von Holz und Holzwerkstoffen auf der Basis von oder unter Mitverwendung von 1-[[2-(2,4-dichlorphenyl)-1,3-dioxolan-2-yl]methyl]-1H-1,2,4-triazol, mindestens eines Verdünnungsmittels sowie ggf. eines Verarbeitungshilfs- und/oder Zusatzmittels, eines organisch-chemischen Bindemittels und/ oder Fixierungsmittels, Farbstoffes, Pigmentes, Farbstoff- oder Pigmentgemisches, gerecht wird. Gemäß der Erfindung enthält das Mittel oder Konzentrat 0,001 - 25 Gew.-% 1-[[2-(2,4-dichlorphenyl)-1,3-dioxolan-2-yl]methyl]-1H-1,2,4-triazol, 0,3 - 30 Gew.-% 2-Isobutylphenyl-N-methylcarbamat und mehr als 40 Gew.-% eines Gemisches oder eines chemischen Mittels, bestehend aus mindestens einem Verdünnungsmittel, 40 - 0,1 Gew.-% (berechnet als Feststoff), vorzugsweise 18 - 1 Gew.-%, mindestens eines Bindemittels und/oder Fixierungsmittels sowie gegebenenfalls Verarbeitungshilfs- und/oder Zusatzmittel, Farbstoffe und/oder Pigmente, wobei das Gewichts verhältnis von Bindemittel, Fixierungsmittel und/oder eines deren Gemische zu dem Verdünnungsmittel oder Verdünnungsmittelgemisch 8,5 : 1 bis 1 : 99 beträgt und das Verdünnungsmittel ein organisch-chemisches Lösungsmittel oder Lösungsmittelgemisch, vorzugsweise mindestens ein unpolares, organisch-chemisches Lösungsmittel und/oder Hilfslösemittel und/oder ein öliges oder ölartiges schwerflüchtiges organisch-chemisches Lösungsmittel enthält oder daraus besteht.

Die erfindungsgemäß verwendeten Fixierungs- und/oder Bindemittel bewirken in verdünnter Lösung, wobei ein bestimmtes Verhältnis zwischen Fixierungs- und/oder Bindemittel und Verdünnungsmittel eingehalten wird, nicht nur ein gutes Eindringen in die Holzoberfläche, sondern ebenfalls eine dauerhafte Fixierung der Wirkbestandteile im Holzinnern.

Als Fixierungsmittel werden vor allem solche Verbindungen eingesetzt, die zusätzlich eine Verflüchtigung der Wirkstoffe und/oder eine Kristallisation bzw. Ausfällung verhindern und/oder die mit dem eingesetzten Bindemittel gut verträglich oder verarbeitbar sind. Vorzugsweise werden Fixierungsmittel auf der Basis von Ketonen und/oder Polyvinylalkyläthern, z. B. Ketone mit Alkyl-, Aryl- oder Aralkylgruppen, vorzugsweise Benzophenon, Äthylbenzophenon; Polyvinylalkyläther, vorzugsweise Polyvinylmethyläther sowie andere hochsiedende Hilfsmittel verwendet.

Als organische schwerflüchtige ölige oder ölartige Lösungsmittel mit einer Verdunstungszahl über 35 und einem Flammpunkt oberhalb 30 °C, vorzugsweise oberhalb 45 °C, werden vorteilhaft wasserunlösliche oder kaum wasserlösliche Lösungsmittel eingesetzt. Als derartige Lösungsmittel werden entsprechende Mineralöle oder deren Aromatenfraktionen oder mineralölhaltige Lösungsmittelgemische oder aliphatische Kohlenwasserstoffe, vorzugsweise Testbenzin, Petroleum, Gasöl und/oder Alkylbenzol usw., verwendet.

Vorzugsweise gelangen Mineralöle mit einem Siedebereich von 170 - 220 °C, Testbenzin mit einem Siedebereich von 170 - 220 °C, Spindelöl mit einem Siedebereich von 250 - 350 °C, Petroleum bzw. Aromaten vom Siedebereich 160 - 280 °C, Terpentinöl und dergleichen zum Einsatz.

In einer Ausführungsform wurden auch hochsiedende Gemische von aromatischen und/oder aliphatischen Kohlenwasserstoffen mit einem Siedebereich von 150 - 350 °C, vorzugsweise 180 - ca. 220 °C, und/oder Spindelöl verwendet.

Die organischen schwerflüchtigen öligen oder ölartigen Lösungsmittel mit einer Verdunstungszahl über 35 und einem Flammpunkt oberhalb 30 °C, vorzugsweise oberhalb 45 °C, können nach einer Ausführungsform teilweise durch leicht- oder mittelflüchtige organisch-chemische Lösungsmittel ersetzt werden, mit der Maßgabe, daß das Lösungsmittelgemisch ebenfalls eine Verdunstungszahl über 35 und einen Flammpunkt oberhalb 30 °C, vorzugsweise oberhalb 45 °C, aufweist und daß das InsektizidFungizid-Gemisch in diesem Lösungsmittelgemisch löslich ist. Dabei sollte das Insektizid-Fungizid-Gemisch mindestens genau so gut löslich sein wie in den vorgenannten öligen oder ölartigen Lösungsmitteln. Es wurde festgestellt, daß je nach Verdunstungszahl und Flammpunkt des verwendeten öligen oder ölartigen Lösungsmittels das organische schwerflüchtige ölige oder ölartige Lösungsmittel bis zu 20 Gew.-%, vorzugsweise bis zu 5 Gew.-%, durch ein Lösungsmittel mit einer niedrigeren Verdunstungszahl ersetzt werden kann.

Das anwendungsfertige Mittel enthält nach einer weiteren Ausführungsform 0,001 - 5 Gew.-%, vorzugsweise 0,2 - 2 Gew.-%, 1-[[2-(2,4-dichlorphenyl)-1,3-dioxolan-2-yl]methyl]-1H-1,2,4-triazol, 0,3 - 3 Gew.-%, vorzugsweise 0,5 - 2 Gew.-%, 2-Isobutylphenyl-N-methylcarbamat und 0,1 - 28 Gew.-%, vorzugsweise 1 - 18 Gew.-%, (berechnet als Feststoff) mindestens eines organisch-chemischen Bindemittels und/oder Fixierungsmittels, wobei das Gewichtsverhältnis des Gesamtanteiles an organisch-chemischem Bindemittel und/oder Fixierungsmittel zu dem Gesamtanteil des Verdünnungsmittels (einschl. Lösungsmittel oder Lösungsmittelgemisch) 1 : 2 bis 1 : 25, vorzugsweise 1 : 5 bis 1 : 15, beträgt.

Das in dem Mittel oder Konzentrat enthaltene Verdünnungsmittel besteht bevorzugt aus mindestens einem organisch-chemischen, schwerflüchtigen Lösungsmittel mit einer Verdunstungszahl über 35 und einem Flammpunkt oberhalb 30 °C, vorzugsweise aus einem öligen oder ölartigen, organisch-chemischen Lösungsmittel oder Lösungsmittelgemisch und/oder Gemisch mit Hilfslösemittel oder enthält ein oder mehrere dieser schwerflüchtigen Lösungsmittel.

Das anwendungsfertige Mittel besteht nach einer bevorzugten Ausführungsform aus 0,001 - 5 Gew.-%, vorzugsweise 0,2 - 2 Gew.-%, 1-[[2-(2,4-dichlorphenyl)-1,3-dioxolan-2-yl]methyl]-1H-1,2,4-triazol, 0,3 - 3 Gew.-%, vorzugsweise 0,5 - 2 Gew.-%, 2-Isobutylphenyl-N-methylcarbamat, 0,1 - 28 Gew.-%,vorzugsweise 1 - 18 Gew.-%, mindestens eines organisch-chemischen Bindemittels und/oder Fixierungsmittels oder Weichmachers, 0 - 5 Gew.-%, vorzugsweise 0,01 - 4 Gew.-%, mindestens eines anderen in dem organisch-chemischen Lösungsmittel oder Lösungsmittelgemisch löslichen Biozides oder Biozidgemisches, 0 - 8 Gew.-%, vorzugsweise 0,1 - 4 Gew.-%, mindestens eines wasserunlöslichen Farbstoffes, Farbpigmentes und/oder Korrosionsschutzmittels, Siccatives und/oder UV-Stabilisators und/oder anderen Zusatzmittels, 99,599 Gew.-% - 51 Gew.-%, vorzugsweise 98,190 Gew.-% - 70 Gew.-%, eines Verdünnungsmittels oder Verdünnungsmittelgemisches, bestehend aus mindestens einem organisch-chemischen Lösungsmittel oder Lösungsmittelgemisch.

Nach einer anderen Ausführungsform sind in dem anwendungsfertigen Mittel zum Konservieren von Holz und Holzwerkstoffen bis zu 65 Gew.-%, vorzugsweise bis zu 35 Gew.-%, des 1-[[2-(2,4-dichlorphenyl)-1,3-dioxolan-2-yl]methyl]-1H-1,2,4-triazols (Azaconazol) durch ein anderes Fungizid oder Fungizidgemisch, vorzugsweise durch N,N-Dimethyl-N'-phenyl-N'-(fluordichlor-methylthiosulfamid (Dichlofluanid) und/oder N,N-Dimethyl-N'-tolyl-N'-fluordichlormethylthio)-sulfamid (Tolylfluanid) ersetzt.

Nach einer bevorzugten Ausführungsform enthält das Konzentrat 2 - 25 Gew.-%, vorzugsweise 4 - 10 Gew.-%, 1-[[2-(2,4-dichlorphenyl)-1,3-dioxolan-2-yl] methyl]1H-1,2,4-triazol, 1,5 - 30 Gew.-%, vorzugsweise 3 - 10 Gew.-%, 2-Isobutylphenyl-N-methylcarbamat und 96,5 - 54 Gew.-%, vorzugsweise 93 - 80 Gew.-%, eines Gemisches oder eines chemischen Mittels bestehend aus einem Verdünnungsmittel und Bindemittel und/oder Fixierungsmittel sowie gegebenenfalls Verarbeitungshilfs- und/oder Zusatzmittel, Farbstoffe und/oder Pigmente, wobei das Gewichtsverhältnis des Gesamtanteiles an organisch-chemischem Bindemittel und/oder Fixierungsmittel oder Weichmacher zu dem Gesamtanteil des Verdünnungsmittels (einschl. Lösungsmittel oder Lösungsmittelgemisch) 8,5 : 1 bis 1 : 48, vorzugsweise 1 : 1,45 bis 1 : 11,5, beträgt.

Die Erfindung betrifft weiterhin ein Verfahren zur Herstellung des Mittels oder Konzentrates zum Konservieren von Holz und Holzwerkstoffen, wobei die Biozide des Mittels oder Konzentrats bei Temperaturen von -5 °C bis 80 °C, vorzugsweise 15 °C bis 45 °C, und bei Drücken von 400 mm Hg bis 850 mm Hg (0,5332 bis 1,1332 bar, vorzugsweise 600 mm Hg bis 790 mm Hg (0,7999 bis 1,0532 bar) mit dem Verdünnungsmittel sowie den anderen Bestandteilen vermischt werden.

Beispiel:

Konzentrat

Azaconazole = 1-[(2-(2,4-Dichlorphenyl)-1,3-dioxolan-2-yl]methyl]-1H-1,2,4-triazol 15,- Gew.-%
Bassa = 2- sek. - Butylphenyl-N-methylcarbamat 20,- Gew.-%
Alkydharz (thixotrop) 21,- Gew.-%
White spirits (Gemisch aliphatischer und aromatischer Kohlenwasserstoffe 4,- Gew.-%
Alkydharz 40,- Gew.-%

## Patentansprüche

1. Mittel oder Konzentrat zum Konservieren von Holz und Holzwerkstoffen auf der Basis oder unter Mitverwendung von 1-[[2-(2,4-dichlorphenyl)-1,3-dioxolan-2-yl]methyl]-1H-1,2,4-triazol, mindestens eines Verdünnungsmittels sowie ggf. eines Verarbeitungshilfsmittels- und/oder Zusatzmittels, eines organisch-chemischen Bindemittels und/oder Fixierungsmittels, Farbstoffes, Pigmentes, Farbstoff- oder Pigmentgemisches, dadurch gekennzeichnet, daß das Mittel oder Konzentrat
   0,001 - 25 Gew.-%
   1-[[2-(2,4-dichlorphenyl)-1,3-dioxolan-2-yl]-methyl]--1H-1,2,4-triazol,
   0,3 - 30 Gew.%
   2-Isobutylphenyl-N-methylcarbamat und
   mehr als 40 Gew.-%
   eines Gemisches oder eines chemischen Mittels, bestehend aus mindestens einem Verdünnungsmittel,
   40 - 0,1 Gew.-% (berechnet als Feststoff), vorzugsweise 18 - 1 Gew.-%,
   mindestens eines Bindemittels und/oder Fixierungsmittels sowie gegebenenfalls Verarbeitungshilfsmittel und/oder Zusatzmittels, Farbstoffe und/oder Pigmente enthält, wobei das Gewichtsverhältnis von Bindemittel, Fixierungsmittel und/oder eines deren Gemische zu dem Verdünnungsmittel oder Verdünnungsmittelgemisch
   8,5 : 1 bis 1 : 99
   beträgt, und das Verdünnungsmittel ein organischchemisches Lösungsmittel oder Lösungsmittelgemisch, vorzugsweise mindestens ein unpolares, organischchemisches Lösungsmittel und/oder Hilfslösemittel und/oder ein öliges oder ölartiges schwerflüchtiges organisch-chemisches Lösungsmittel, enthält oder daraus besteht.

2. Mittel zum Konservieren von Holz und Holzwerkstoffen nach Anspruch 1, dadurch gekennzeichnet, daß das Mittel (das anwendungsfertige Mittel)
   0,001 - 5 Gew.-%, vorzugsweise
   0,2 - 2 Gew.-%,
   1-[[2-(2,4-dichlorphenyl)-1,3-dioxolan-2-yl]-methyl]--1H-1,2,4-triazol,
   0,3 - 3 Gew.-%, vorzugsweise
   0,5 - 2 Gew.-%,
   2-Isobutylphenyl-N-methylcarbamat und
   0,1 - 28 Gew.-%, vorzugsweise
   1 - 18 Gew.-%,
   (berechnet als Feststoff) mindestens eines organisch-chemischen Bindemittels und/oder Fixierungs mittels enthält und das Gewichtsverhältnis des Gesamtanteiles an organisch-chemischem Bindemittel und/oder Fixierungsmittel zu dem Gesamtanteil des Verdünnungsmittels (einschl. Lösungsmittel oder Lösungsmittelgemisch)
   1 : 2 bis 1 : 25, vorzugsweise
   1 : 5 bis 1 . 15,
   beträgt.

3. Mittel zum Konservieren von Holz und Holzwerkstoffen nach Ansprüchen 1 oder 2, dadurch gekennzeichnet, daß das Verdünnungsmittel aus mindestens einem organisch-chemischen, schwerflüchtigen Lösungsmittel mit einer Verdunstungszahl über 35 und einem Flammpunkt oberhalb 30 °C, vorzugsweise aus einem öligen oder ölartigen, organisch-chemischen Lösungsmittel oder Lösungsmittelgemisch besteht oder ein oder mehrere dieser schwerflüchtigen Lösungsmittel enthält.

4. Mittel zum Konservieren von Holz und Holzwerkstoffen nach einem oder mehreren der Ansprüche 1 bis 3, dadurch gekenzeichnet, daß das anwendungsfertige Mittel aus
   0,001 - 5 Gew.-%, vorzugsweise
   0,2 - 2 Gew.-%,
   1-[[2-(2,4-dichlorphenyl)-1,3-dioxolan-2-yl]-methyl]-1H-1,2,4-triazol,
   0,3 - 3 Gew.-%, vorzugsweise
   0,5 - 2 Gew.-%,
   2-Isobutylphenyl-N-methylcarbamat
   0,1 - 28 Gew.-%, vorzugsweise
   1 - 18 Gew.-%,
   mindestens eines organisch-chemischen Bindemittels und/oder Fixierungsmittels,
   0 - 5 Gew.-%, vorzugsweise
   0,1 - 4 Gew.-%,
   mindestens eines anderen in dem organisch-chemischen Lösungsmittel oder Lösungsmittelgemisch löslichen Biozides oder Biozidgemisches,
   0 - 8 Gew.-%, vorzugsweise
   0,1 - 4 Gew.-%,
   mindestens eines wasserunlöslichen Farbstoffes, Farbpigmentes und/oder Korrosisonsschutzmittels, Siccatives und/oder UV-Stabilisators und
   99,599 Gew.-% - 51 Gew.-%, vorzugsweise

98,190 Gew.-% - 70 Gew.-%,

eines Verdünnungsmittels oder Verdünnungsmittelgemisches, bestehend aus mindestens einem organisch-chemischen Lösungsmittel oder Lösungsmittelgemisch besteht.

**5.** Mittel zum Konservieren von Holz und Holzwerkstoffen nach einem der Ansprüche 1 bis 4, dadurch gekennzeichnet, daß bis zu 65 Gew.%, vorzugsweise bis zu 35 Gew.-%, des 1-[[2-(2,4-dichlorphenyl)-1,3-dioxolan-2-yl]-methyl]-1H-1,2,4-triazols (Azaconazol) durch ein anderes Fungizid oder Fungizidgemisch, vorzugsweise durch N,N-Dimethyl-N'-phenyl-N'-(fluordichlor-methylthiosulfamid und/oder N,N-Dimethyl-N'-tolyl-N'-(fluordichlormethylthio)-sulfamid ersetzt sind.

**6.** Konzentrat zum Konservieren von Holz und Holzwerkstoffen nach einem oder mehreren der Ansprüche 1 bis 5, dadurch gekennzeichnet, daß das Konzentrat

2 - 25 Gew.-%, vorzugsweise

4 - 10 Gew.-%,

1-[[2-(2,4-dichlorphenyl)-1,3-dioxolan-2-yl]-methyl]-1H-1,2,4-triazol,

1,5 - 30 Gew.%, vorzugsweise

3 - 10 Gew.-%,

2-Isobutylphenyl-N-methylcarbamat und

96,5 - 54 Gew.-%, vorzugsweise

93 - 80 Gew.-%,

eines Gemisches oder eines chemischen Mittels, bestehend aus einem Verdünnungsmittel und Bindemittel und/oder Fixierungsmittel sowie gegebenenfalls Verarbeitungshilfs- und/oder Zusatzmittel, Farbstoffe und/oder Pigmente, enthält, wobei das Gewichtsverhältnis des Gesamtanteiles an organischchemischem Bindemittel und/oder Fixierungsmittel zu dem Gesamtanteil des Verdünnungsmittels (einschl. Lösungsmittel oder Lösungsmittelgemisch

8,5 : 1 bis 1 : 48, vorzugsweise

1 : 1,45 bis 1 : 11,5,

beträgt.

**7.** Verfahren zur Herstellung des Mittels oder Konzentrates zum Konservieren von Holz und Holzwerkstoffen nach einem oder mehreren der Ansprüche 1 bis 6, dadurch gekennzeicnet, daß die Biozide des Mittels oder Konzentrates bei Temperaturen von

-5 °C bis 80 °C, vorzugsweise

15 °C bis 45 °C,

und bei Drücken von

400 mm Hg bis 850 mm Hg (0,5332 bis 1,1332 bar, vorzugsweise

600 mm Hg bis 790 mm Hg (0,799 bis 1,0532 bar)

mit dem Verdünnungsmittel sowie den anderen Bestandteilen vermischt werden.

## Claims

**1.** An agent or concentrate for preserving wood and timber materials, on the basis of or with the joint use of 1-[[2-(2,4-dichlorophenyl)-1,3-dioxolan-2-yl]methyl]-1H-1,2,4-triazole, at least one diluent and also optionally a processing aid and/or additive, an organic-chemical binder and/or fixing agent, dye, pigment, dye or pigment mixture, characterised in that the agent or concentrate contains

0.001 - 25% by weight

1-[[2-(2,4-dichlorophenyl)-1,3-dioxolan-2-yl]-methyl]-1H-1,2,4-triazole,

0.3 - 30% by weight

2-isobutylphenyl-N-methyl carbamate and

more than 40% by weight

of a mixture or a chemical agent, consisting of at least one diluent,

40 - 0.1% by weight (calculated as solid), preferably 18 - 1% by weight,

of at least one binder and/or fixing agent and also optionally processing aid and/or additive, dyes and/or pigments, the weight ratio of binder, fixing agent and/or a mixture thereof to the diluent or diluent mixture is

8.5 : 1 to 1 : 99,

and the diluent contains or consists of an organic-chemical solvent or solvent mixture, preferably at least one non-polar, organic-chemical solvent and/or solubiliser and/or an oily or oil-like, poorly volatile, organic-chemical solvent.

**2.** An agent for preserving wood and timber materials according to Claim 1, characterised in that the agent (the agent ready for use) contains

0.001 - 5% by weight, preferably

0.2 - 2% by weight,

1-[[2-(2,4-dichlorophenyl)-1,3-dioxolan-2-yl]-methyl]-1H-1,2,4-triazole,

0.3 - 3% by weight, preferably

0.5 - 2% by weight,

2-isobutylphenyl-N-methyl carbamate and

0.1 - 28% by weight, preferably

1 - 18% by weight,

(calculated as solid) of at least one organic-chemical binder and/or fixing agent and the weight ratio of the total content of organic-chemical binder and/or fixing agent to the total content of diluent (including solvent or solvent mixture) is

1 : 2 to 1 : 25, preferably

1 : 5 to 1 : 15.

**3.** An agent for preserving wood and timber materials according to Claims 1 or 2, characterised in that the diluent consists of at least one organic-chemical, poorly volatile solvent having an evaporation number above 35 and a flash point above 30 ° C, preferably of an oily or oil-like, organic-chemical solvent or solvent mixture or contains one or more of these poorly volatile solvents.

**4.** An agent for preserving wood and timber materials according to one or more of Claims 1 to 3, characterised in that the agent ready for use consists of
0.001 - 5% by weight, preferably
0.2 - 2% by weight,
1-[[2-(2,4-dichlorophenyl)-1,3-dioxolan-2-yl]-methyl]-1H-1,2,4-triazole,
0.3 - 3% by weight, preferably
0.5 - 2% by weight,
2-isobutylphenyl-N-methyl carbamate,
0.1 - 28% by weight, preferably
1 - 18% by weight,
of at least one organic-chemical binder and/or fixing agent,
0 - 5% by weight, preferably
0.1 - 4% by weight,
of at least one other biocide or biocide mixture which is soluble in the organic-chemical solvent or solvent mixture,
0 - 8% by weight, preferably
0.1 - 4% by weight,
of at least one water-insoluble dye, colour pigment and/or anti-corrosion agent, siccative and/or UV stabiliser and
99.599% by weight - 51% by weight, preferably
98.190% by weight - 70% by weight,
of a diluent or diluent mixture, consisting of at least one organic-chemical solvent or solvent mixture.

**5.** An agent for preserving wood and timber materials according to one of Claims 1 to 4, characterised in that up to 65% by weight, preferably up to 35% by weight, of the 1-[[2-(2,4-dichlorophenyl)-1,3-dioxolan-2-yl]methyl]-1H-1,2,4-triazole (Azaconazol) is replaced by another fungicide or fungicide mixture, preferably by N,N-dimethyl-N'-phenyl-N'-(fluorodichloro-methylthiosulphamide and/or N,N-dimethyl-N'-tolyl-N'-(fluorodichloromethylthio)-sulphamide.

**6.** A concentrate for preserving wood and timber materials according to one or more of Claims 1 to 5, characterised in that the concentrate contains
2 - 25% by weight, preferably
4 - 10% by weight,
1-[[2-(2,4-dichlorophenyl)-1,3-dioxolan-2-yl]-methyl]-1H-1,2,4-triazole,
1.5 - 30% by weight, preferably
3 - 10% by weight,
2-isobutylphenyl-N-methyl carbamate and
96.5 - 54% by weight, preferably
93 - 80% by weight,
of a mixture or a chemical agent, consisting of a diluent and binder and/or fixing agent and also optionally processing aid and/or additive, dyes and/or pigments, the weight ratio of the total content of organic-chemical binder and/or fixing agent to the total content of diluent (including solvent or solvent mixture) being
8.5 : 1 to 1 : 48, preferably
1 : 1.45 to 1 : 11.5.

**7.** A method for producing the agent or concentrate for preserving wood and timber materials according to one or more of Claims 1 to 6, characterised in that the biocides of the agent or concentrate are mixed with the diluent and the other constituents at temperatures of
-5 ° C to 80 ° C, preferably
15 ° C to 45 ° C,
and at pressures of
400 mm Hg to 850 mm Hg (0.5332 to 1.1332 bar), preferably
600 mm Hg to 790 mm Hg (0.799 to 1.0532 bar).

## Revendications

**1.** Agent ou concentré pour la conservation du bois et des matériaux dérivés du bois basé sur l'emploi de 1-[[(2-(2,4-dichlorophényl)1,3-dioxolan-2-yl]méthyl]-1H-1,2,4-triazol, d'au moins un agent diluant et éventuellement d'un agent de traitement auxiliaire et/ou d'un additif, d'un agent liant organochimique et/ou d'un agent de fixation, d'un colorant, d'un pigment, d'un mélange de colorants ou d'un mélange de pigments, caractérisé en ce que l'agent ou le concentré contient
0,001 - 25 % en poids
de 1-[[(2-(2,4-dichlorophényl)-1,3-dioxolan-2-yl] méthyl] -1H-1,2,4-triazol,
0,3 - 30 % en poids
de 2-isobutylphényl-N- méthylcarbamate et
plus de 40 % en poids
d'un mélange ou d'un agent chimique constitué d'au moins un agent diluant,
40 -1 % en poids (calculé sur base des solides),

de préférence 18 - 1 % en poids,
d'au moins un agent liant et/ou d'un agent de fixation et éventuellement d'agents de traitement auxiliaire et/ou d'additifs, de colorants et/ou de pigments, le rapport pondéral des agents liants, des agents de fixation et/ou d'un de leurs mélanges vis-à-vis de l'agent diluant ou du mélange d'agents diluants étant de
8,5 : 1 à 1 : 39
et l'agent diluant contenant un solvant ou un mélange de solvants organochimiques, de préférence au moins solvant et/ou un agent solvant auxiliaire organochimiques non polaires et/ou un solvant organochimique huileux ou oléiforme peu volatil, ou est constitué de ces substances.

2. Agent de conservation du bois et des matériaux dérivés du bois selon la revendication 1, caractérisé en ce que l'agent (l'agent prêt à l'emploi) contient
0,001 - 5 % en poids, de préférence
0,2 - 2 % en poids,
de 1-[[(2-(2,4-dichlorophényl)-1,3-dioxolan-2-yl] méthyl]-1H-1,2,4-triazol,
0,3 - 3 % en poids, de préférence
0,5 - 2 % en poids
de 2-isobutylphényl-N-méthylcarbamate et
0,1 - 28 % en poids, de préférence
1 - 18 % en poids
(calculés comme solides) d'au moins un agent liant et/ou un agent de fixation organochimique, le rapport pondéral de la fraction totale d'agent liant et/ou d'agent de fixation organochimique vis-à-vis de la fraction totale d'agent diluant (y compris le solvant ou le mélange de solvants) étant de
1 : 2 à 1 : 25, de préférence de
1 : 5 à 1 : 15.

3. Agent de conservation du bois et des matériaux dérivés du bois selon la revendication 1 ou 2, caractérisé en ce que le diluant est constitué d'au moins un solvant organochimique peu volatil présentant un degré d'évaporation supérieur à 35 et un point d'éclair supérieur à 30 °C, de préférence d'un solvant ou d'un mélange de solvants organochimiques huileux ou oléiformes, ou contient un ou plusieurs de ces solvants peu volatils.

4. Agent de conservation du bois et des matériaux dérivés du bois selon une ou plusieurs des revendications 1 à 3, caractérisé en ce que l'agent prêt à l'emploi est constitué de
0,001 - 5 % en poids, de préférence
0,2 - 2 % en poids,
de 1-[[(2-(2,4- dichlorophényl)-1,3-dioxolan-2-yl] méthyl]-1H-1,2,4-triazol, de
0,3 - 3 % en poids, de préférence
0,5 - 2 % en poids
de 2-isobutylphényl-N-méthylcarbamate, de
0,1 - 28 % en poids, de préférence
1 - 18 % en poids
d'au moins un agent liant et/ou un agent de fixation organochimique, de
0 - 5 % en poids, de préférence
0,1 - 4 %, en poids
d'au moins un autre biocide ou mélange de biocides solubles dans le solvant ou le mélange de solvants organique, de
0 - 8 % en poids, de préférence
0,1 - 4 % en poids,
d'au moins un colorant, un pigment coloré et/ou un agent anti-corrosion, un agent siccatif et/ou un stabilisateurs aux UV non solubles dans l'eau, et de
99,599 % en poids à 51 % en poids, de préférence
98,190 à 70 % en poids,
d'un diluant ou d'un mélange de diluants constitué d'au moins un solvant ou un mélange de solvants organochimiques.

5. Agent de conservation du bois et de matériaux dérivés du bois selon l'une quelconque des revendications 1 à 4, caractérisé en ce qu'on remplace jusqu'à 65 % en poids, de préférence jusqu'à 35 % en poids, du 1-[[(2-(2,4-dichlorophényl)-1,3-dioxolan-2 -yl]méthyl]-1H-1,2,4-triazol (Azaconazol) par un autre fongicide ou mélange de fongicides, de préférence par du N,N-diméthyl-N'-(fluorodichlorométhylthio) sulfamide et/ou par du N,N-diméthyl-N'-tolyl- N'-(fluorodichlorométhylthio) sulfamide.

6. Concentré de conservation du bois et des matériaux dérivés du bois selon une ou plusieurs des revendications 1 à 5, caractérisé en ce que le concentré contient
2 - 25 % en poids, de préférence
4 - 10 % en poids
de 1-[[(2-(2,4-dichlorophényl)-1,3-dioxolan-2-yl] méthyl]-1H-1,2,4-triazol,
1,5 - 30 % en poids, de préférence
3 - 10 % en poids,
de 2-isobutylphényl-N-méthylcarbamate et
96,5 - 54 % en poids, de préférence
93 - 80 % en poids
d'un mélange ou d'un agent chimique constitué d'un diluant et d'un liant et/ou d'un agent de fixation et, éventuellement, des agents de traitement auxiliaire et/ou des additifs, des colorants et/ou des pigments, le rapport pondéral de la fraction totale d'agent liant et/ou d'agent

de fixation organochimique vis-à-vis de la fraction totale de diluant (y compris le solvant ou le mélange de solvants) étant de

8,5 : 1 à 1 : 48, de préférence de

1 : 1,45 à 1 : 11,5.

**7.** Procédé de fabrication de l'agent ou du concentré de conservation du bois et des matériaux dérivés du bois selon une ou plusieurs des revendications 1 à 6, caractérisé en ce que les biocides de l'agent ou du concentré sont mélangés au diluant ainsi qu'aux autres composants à des températures de

-5 ° C à 80 ° C, de préférence

15 à 45 ° C, et sous des pressions de

400 mm Hg à 850 mm Hg (0,5332 à 1,1332 bar), de préférence

600 mm Hg à 790 mm Hg (0,7999 à 1,0532 bar).